**Europäisches Patentamt**

**European Patent Office**

**Office européen des brevets**

(11) Numéro de publication: **0 069 034**
**B1**

(12) **FASCICULE DE BREVET EUROPEEN**

(45) Date de publication du fascicule du brevet:
14.05.86

(21) Numéro de dépôt: **82420085.1**

(22) Date de dépôt: **29.06.82**

(51) Int. Cl.⁴: **F 16 K 5/06**, F 16 J 15/20,
F 16 K 1/226

(54) Joint d'étanchéité pour températures hautes ou basses en conditions statiques ou dynamiques.

(30) Priorité: **01.07.81 FR 8113361**

(43) Date de publication de la demande:
**05.01.83 Bulletin 83/1**

(45) Mention de la délivrance du brevet:
**14.05.86 Bulletin 86/20**

(84) Etats contractants désignés:
**AT BE CH DE GB IT LI LU NL SE**

(56) Documents cités:
**DE - A - 2 411 403**
**DE - A - 2 636 158**
**FR - A - 2 331 725**
**FR - A - 2 452 645**
**GB - A - 907 621**
**US - A - 1 783 762**

**Handbuch der Dichtungstechnik (E. SCHMID), 1980,
Expert Verlag, D-7031 Grafenau 1, pages 365-366**

(73) Titulaire: **CEFILAC, 30 avenue de Messine B.P. 393-08,
F-75365 Paris Cedex 08 (FR)**

(72) Inventeur: **Combe, Gérard, La Garigue Allée de la
Colline, F-42530 Saint-Genest Lerpt (FR)**
Inventeur: **Chabance, Joel, Montoisel Pralong,
F-42600 Montbrison (FR)**

(74) Mandataire: **Givord, Jean-Pierre et al, PECHINEY 28, rue
de Bonnel, F-69433 Lyon Cedex 3 (FR)**

ACTORUM AG

## Description

Le joint d'étanchéité, qui fait l'objet de l'invention, concerne la réalisation de vannes à boisseau sphérique pour lesquelles on recherche und étanchéité dans un large domaine de température qui s'étend depuis des températures cryogéniques, en passant par l'ambiante, jusqu'à des niveaux de température élevées, pouvant atteindre et même dépasser 1000 °C.

Ce joint concerne, non seulement les utilisations en statique, mais également en dynamique, c'est-à-dire celles dans lesquelles le joint est en contact étanche avec au moins une surface mobile, le déplacement relatif s'effectuant sans perte de contact, de façon continue ou discontinue.

Ce joint permet, en particulier, la réalisation de robinets et de vannes utilisées pour contrôler la circulation de fluides de toutes natures portées à des températures et des pressions élevées.

Le document DE-A-2 636 158 décrit un joint d'étanchéité pour une vanne à boisseau sphérique employée à plus de 250 °C, comportant d'une part, un joint annulaire de section droite d'allure triangulaire armé du côté du bâti par un anneau métallique de section droite en L, d'autre part un élément d'appui à effet ressort constitué typiquement par un anneau en graphite expansé comprimé situé entre le bâti et une face extérieure de l'armature en L. Le matériau du joint lui-même, en contact avec le boisseau sphérique, est typiquement en électro-graphite, en matière plastique et/ou en carbone dur imprégné de métal. Le rôle de l'élément d'appui en graphite expansé comprimé est de permettre un jeu radial avec des contraintes plus élevées et d'être donc plus tolérant vis-à-vis du choix du matériau du joint lui-même. Le matériau du joint est nu du côté de la surface du boisseau et il ne pourrait pas résister à des températures et pressions élevées, particulièrement dans le cas où ces températures sont voisines de 1000 °C.

Ainsi, aucun des joints connus ne permet de réaliser des étanchéités durables dans le cas de températures et de pressions élevées, que ce soit en dynamique ou en statique.

Le joint d'étanchéité annulaire statique et/ou dynamique de l'invention est destiné à la réalisation de l'étanchéité entre le corps de vanne, le boisseau sphérique et éventuellement une bride d'une vanne à boisseau sphérique, utilisée sur les canalisation parcourues par des fluides à pression élevée et/ou à température élevée pouvant aller jusqu'à 1000 °C.

Le joint de l'invention comporte comme il est connu une âme profilée revêtue en partie seulement par un gainage métallique annulaire. Selon l'invention, l'âme est en graphite expansé comprimé et son gainage métallique consiste en au moins deux éléments de gainage annulaires dont la section est en forme de cornière et qui sont séparés par au moins deux zones dans lesquelles l'âme est à nu.

A la différence du joint décrit dans DE-A-2 636 158, il n'y a pas d'élément d'étanchéité secondaire et, vis-à-vis du bâti aussi bien que vis-à-vis du boisseau sphérique, l'étanchéité est assurée par le contact de l'âme en graphite expansé comprimé qui se trouve à nu entre les éléments de gainage métalliques.

Les éléments de gainage métalliques sont par exemple au nombre de trois et ont chacun une section droite en forme de cornière, laissant à nu l'âme en graphite expansé dans trois zones dans lesquelles elle se trouve en contact respectivement avec le corps de vanne, la bride de serrage et le boisseau sphérique.

La description et les figures ci-après permettront de mieux comprendre les caractéristiques du joint de l'invention.

Fig. 1 vanne à boisseau sphérique comportant des joints suivant l'invention.

Fig. 2 vue d'un détail agrandi de la fig. 1 dans la zone du joint suivant l'invention.

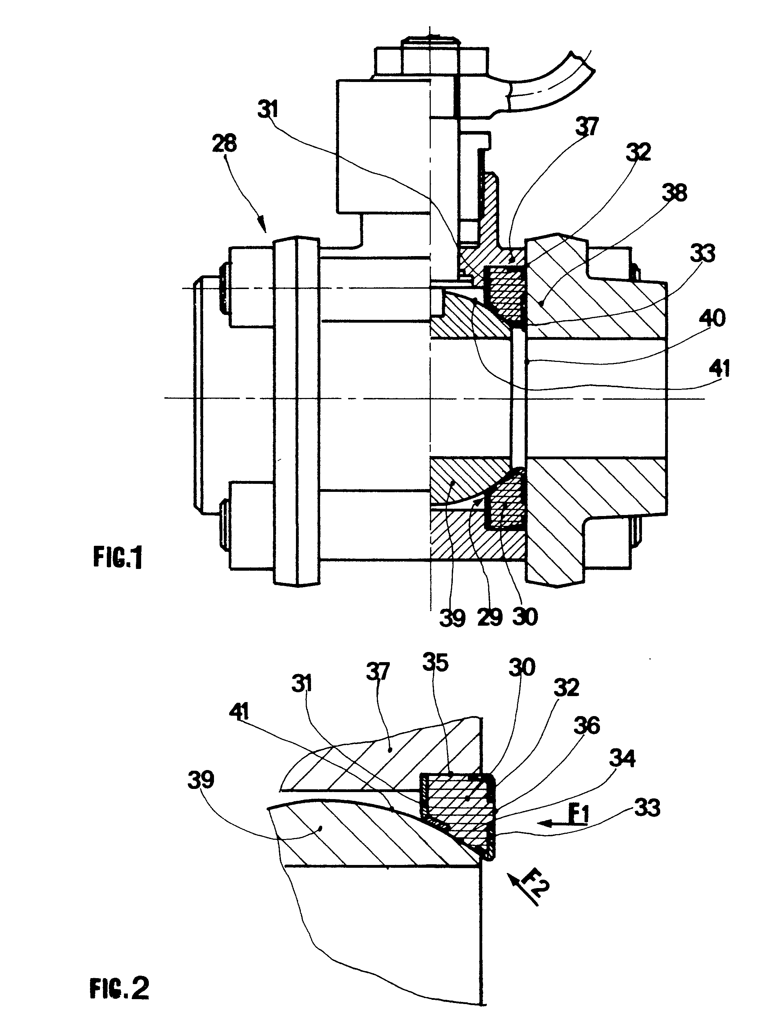

La fig. 1 montre, en coupe partielle, une vanne à boisseau sphérique (28) équipée de joints suivant l'invention. L'un de ces joints (29) est figuré en coupe. La fig. 2 montre une vue partielle du joint (29) en coupe fortement grossi, ces deux figures montrent que le joint (29) est disposé de façon analogue au joint connu. La matière qui constitue l'âme (30) du joint est du graphite expansé comprimé qui est, en partie revêtu par trois éléments de gainage métallique annulaires (31), (32) et (33) dont la section est en forme de cornière. L'adhérence entre ces éléments de gainage et l'âme en graphite expansé est obtenue au moyen d'une colle à base d'élastomère de synthèse.

Suivant l'invention, ces trois éléments de gainage ne sont pas jointifs mais séparés par trois zones annulaires (34), (35) et (36), dans lesquelles la surface de l'âme en graphite expansé est laissée à nu. Dans ces zones, c'est la matière de l'âme en graphite expansé qui se trouve en contact direct respectivement avec le corps de vanne (37), la bride (38) et le boisseau sphérique (39).

Les dimensions du joint sont déterminées de façon que, au moment de la mise en place de celui-ci et du serrage de la bride (38) sur le corps de vanne (37), l'âme du joint (30) soit mise en compression par l'intermédiaire des trois éléments de gainage (31), (32), (33) sur lesquels s'exerce la force de serrage des pièces métalliques qui les entourent.

En particulier, l'élément (33), dont les branches prennent appui respectivement sur le plan (40) de serrage de la bride (38) et sur la surface sphérique (41) du boisseau, est repoussé au cours du serrage de la bride qui se déplace dans le sens de la flèche $F_1$, suivant une direction $F_2$ en refoulant ainsi l'âme en graphite expansé. En même temps, le diamètre d'anneau de cet élément (33) est accru, car il se déplace au contact de la sphère en direction d'un grand cercle. En même temps, l'élément de gainage (32) est repoussé dans une direction sensiblement parallèle à celle de la flèche $F_1$. On comprend que, dans ces conditions, l'âme en graphite expansé, mise en compression dans les zones où elle est gainée, se dilate au contraire dans les zones non revêtues (34), (35) et (36), et vient exercer une pression élastique sur les surfaces avec lesquelles elle est ainsi mise en contact direct.

On obtient ainsi une excellente étanchéité à la fois statique et dynamique. En effet, le graphite expansé a des propriétés autolubrifiantes qui lui permettent de glisser sans grippage sur les surfaces métalliques dans tout le domaine de température compris entre −245 °C et 1000 °C. Par ailleurs, il présente également une plasticité qui lui permet de se conformer avec les surfaces avec lesquelles il est en contact. En particulier, dans le cas des portées statiques telles que les portées du joint (29) dans les zones (35) et (36) sur le corps de vanne et sur la bride. Dans la zone (34), la surface conique de l'âme épouse la surface du boisseau. Un usinage très poussé des surfaces métalliques n'est pas nécessaire. Par contre, dans le cas de la portée sphérique sur laquelle le joint doit glisser, un polissage soigné est souhaitable car il garantit un glissement du graphite sur la surface de contact sans usure et sans perte d'étanchéité.

Lorsque la température et les autres conditions d'utilisation le permettent, il est souhaitable de lubrifier légèrement les portées glissantes, mais l'expérience montre que, à la longue, ces portées se recouvrent d'un film de graphite qui favorise un glissement sans usure des deux surfaces de contact avec un minimum de frottement et sans perte d'étanchéité.

On ne peut éviter que, dans certaines zones, les éléments métalliques de gainage soient aussi en contact glissant avec les surfaces sur lesquelles le joint prend appui. C'est, en particulier, le cas des éléments de gainage (31) et (33) qui, de façon à peu près inévitable, sont en contact avec la surface sphérique du boisseau (39). Dans le cas de l'élément (33), son glissement sur la surface sphérique du boisseau au moment du serrage de la bride le met en pression élastique par rapport à cette surface. Ceci est un avantage, car tout d'abord, cet élément joue le rôle râcleur et détache, à l'occasion des manœuvres d'ouverture ou de fermeture de la vanne, les dépôts solides qui se forment à la longue sur le boisseau. De plus, cet élément ainsi que l'élément (31) coopèrent avec la surface sphérique (41) du boisseau pour empêcher le fluage du graphite expansé en dehors de la zone ainsi délimitée.

On comprend qu'il est donc important de choisir, pour constituer les éléments du gainage, des métaux ou alliages qui présentent un bon coefficient de frottement vis-à-vis de surfaces métalliques avec lesquelles ils seront en frottement glissant, et qu'il est préférable d'avoir dans le cas des éléments de gainage tels que (31, 33) une géométrie et des caractéristiques mécaniques assurant leur contact glissant avec la surface sphérique du boisseau. Les métaux constitutifs des éléments de gainage devront également présenter une très bonne résistance à la corrosion par les fluides avec lesquels ils seront en contact et une compatibilité du point de vue électrochimique avec les métaux ou alliages constituant les vannes.

Les éléments de gainage suivant l'invention doivent être relativement rigides et peu ou pas déformables plastiquement. Ces élément de gainage doivent avoir une limite élastique suffisante pour pouvoir être mis sous pression sur le boisseau. C'est dans ces conditions que le graphite expansé peut exercer, à sont tour une pression élastique sur les parois avec lesquelles il doit assurer l'étanchéité de façon statique ou dynamique, dans les zones où il est en contact direct avec celles-ci. Dans le cas où le film de graphite qui se dépose sur la portée sphérique ne suffit pas à assurer un glissement sans érosion des éléments de gainage (31, 32), on peut, si les températures d'utilisation le permettent, envisager de lubrifier légèrement la surface du boisseau sphérique. On peut aussi envisager d'utiliser des métaux à très bons coefficient de frottement, ou encore effectuer des traitements de surface aptes à améliorer ce coefficient.

Grâce à la faible vitesse de fluage du graphite expansé comprimé, on constate qu'au cours des manœuvres de fermeture et d'ouverture des vannes à boisseau, pendant lesquelles le graphite expansé n'est momentanément plus en contact dans la zone (34) avec la surface du boisseau sphérique (39) sur une certaine longueur, il ne se produit pas de déformation permanente du graphite expansé, même à température élevée.

## Revendications

1. Joint d'étanchéité annulaire statique et/ou dynamique à température pouvant aller jusqu'à 1000 °C, destiné à la réalisation de l'étanchéité entre un corps de vanne (37), un boisseau sphérique (39) et éventuellement und bride (38), ledit joint (29) comportant une âme profilée (30) revêtue en partie seulement par un gainage métallique annulaire, caractérisé en ce que l'âme profilée (30) est en graphite expansé comprimé, et en ce que le gainage métallique consiste en au moins deux éléments de gainage annulaires (31, 32, 33) dont la section est en forme de cornière et qui sont séparés par au moins deux zones, (34, 35, 36) dans lesquelles l'âme (30) en graphite expansé comprimé est à nu.

2. Joint d'étanchéité selon la revendication 1, caractérisé en ce que le gainage métallique de l'âme (30) consiste en trois éléments de gainage annulaires (31, 32, 33) dont la section est en forme de cornière et qui sont séparés par trois zones annulaires (34, 35, 36).

3. Joint d'étanchéité selon la revendication 2, caractérisé en ce que les trois zones annulaires (34, 35, 36) sont situées de telle sorte que l'âme (30) en graphite expansé comprimé qui y est à nu se trouve en contact respectivement avec le corps de vanne (37), la bride (38) et le boisseau sphérique (39).

## Claims

1. An annular static and/or dynamic seal intended to establish fluid-tightness between a valve body (37) a spherical plug (39) and optionally a flange (38) at temperatures as high as 1000 °C, said seal (29) comprising a profiled core (30) covered in part only by an annular metal sheathing, characterized in that the profiled core (30) is made of compressed expanded graphite and in that the metal sheathing consists of at least two annular sheathing elements (31, 32, 33) the cross sections of which are of corner shape and which are separated by at least two zones (34, 35, 36) in which the core (30) of compressed expanded graphite is uncovered.

2. A seal as claimed in Claim 1, characterized in that the metal sheathing of the core (30) consists of three annular sheathing elements (31, 32, 33) the cross sections of which are of corner shape which are separated by three annular zones (34, 35, 36).

3. A seal as claimed in Claim 2, characterised in that the three annular zones (34, 35, 36) are disposed in such a way that the core (30) of compressed expanded graphite which is uncovered therein is in contact with the valve body (37), the flange (38) and the spherical plug (39), respectively.

## Patentansprüche

1. Dichtring für Temperaturen bis zu 1000 °C bei statischen und/oder dynamischen Bedingungen, zur Erstellung einer dichten Verbindung zwischen einem Ventilkörper (37), einem sphärischen Ventilkegel (39) und gegebenenfalls einem Flansch (38), wobei der Dichtring (29) eine profilierte Seele (30) aufweist, die nur teilweise mit einer ringförmigen Metallhülse ummantelt ist, dadurch gekennzeichnet, dass die profilierte Seele (30) aus expandiertem komprimiertem Graphit besteht und dadurch dass die Metallhülse aus mindestens zwei ringförmigen Hülsenelementen (31, 32, 33) besteht, deren Querschnitt die Form eines Winkelprofils hat und die voneinander mindestens durch zwei Bereiche (34, 35, 36) getrennt sind, in denen die Seele (30) aus expandiertem und komprimiertem Graphit freiliegt.

2. Dichtring nach Anspruch 1, dadurch gekennzeichnet, dass die Metallhülse der Seele (30) aus drei ringförmigen Hülsenelementen (31, 32, 33) mit winkligem Querschnitt besteht, die durch drei Ringbereiche (34, 35, 36) voneinander getrennt sind.

3. Dichtring nach Anspruch 2, dadurch gekennzeichnet, dass die drei ringförmigen Bereiche (34, 35, 36) derart angeordnet sind, dass die Seele (30) aus expandiertem und komprimiertem Graphit, die dort freiliegt, den Ventilkörper (37), bzw. den Flansch (38) und den sphärischen Ventilkegel (39) berührt.

FIG.1

FIG.2